Europäisches Patentamt

European Patent Office

Office européen des brevets

(19)

(11) **EP 0 993 993 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(51) Int Cl.⁷: **B60R 16/02**

(21) Anmeldenummer: **99118686.7**

(22) Anmeldetag: **22.09.1999**

(54) **Verfahren zur kapazitiven Objekterkennung bei Fahrzeugen**

Capacitive object recognition method in vehicles

Procédé de reconnaisance capacitive d'object pour vehicules

(84) Benannte Vertragsstaaten:
**DE ES FR GB IT SE**

(30) Priorität: **16.10.1998 DE 19847750**

(43) Veröffentlichungstag der Anmeldung:
**19.04.2000 Patentblatt 2000/16**

(73) Patentinhaber: **Bayerische Motoren Werke Aktiengesellschaft**
**80809 München (DE)**

(72) Erfinder:
• **Eisenmann, Lutz**
**85241 Ampermoching (DE)**
• **Marschner, Christian**
**80803 München (DE)**
• **Griessbach, Robert**
**83629 Weyarn (DE)**
• **Lu, Yan, Dr.**
**85356 Freising (DE)**

(56) Entgegenhaltungen:
EP-A- 0 838 697    WO-A-97/29391
DE-A- 4 110 936    DE-A- 4 417 827
US-A- 3 732 538    US-A- 3 751 674

EP 0 993 993 B1

**Beschreibung**

Die Erfindung bezieht sich auf ein Verfahren gemäß dem Oberbegriff des Patentanspruchs 1.

Derartige Verfahren sind aus verschiedenen Veröffentlichungen, beispielsweise der US 4,796,013 oder der DE 4 110 936 A1 bekannt. Im Prinzip sind die beiden i.d.R. plattenförmigen Elektroden benachbart zu dem jeweiligen Objekt angeordnet. Im Falle einer Belegterkennung für einen Fahrzeugsitz befinden sich die Elektroden in der Polsterung des Sitzes und dort beispielsweise im Sitz- oder Lehnenteil. Die Erkennung wird hier dazu verwendet, Sicherheitseinrichtungen wie Airbag und dgl. nur dann auszulösen, wenn der Sitz tatsächlich besetzt ist.

Es wird die Kapazität des so gebildeten Kondensators gemessen. Bei Anwesenheit einer Person ändert sich die Kapazität des Kondensators aufgrund der relativ guten Leitfähigkeit des Menschen. Dabei ist jedoch problematisch, daß die bekannten Verfahren auf die Fahrzeugmasse bezogen sind. Durch Ableitströme ohm'scher oder kapazitiver Art wird die Kapazitätsmessung stark verfälscht.

Bei praktischen Versuchen hat sich gezeigt, daß der Effekt der Ableitströme den Effekt der Kapazitätsänderung in der Regel bei weitem überwiegt. Erschwerend kommt hinzu, daß die Ableitströme stark von Umgebungsparametern, wie z. B. Feuchtigkeit oder Berührung der Person durch einen anderen Fahrzeuginsassen, abhängig ist. Es treten somit zwei gegensinnig wirkende Effekte auf, wobei der der Ableitströme quantitativ nicht zu fassen ist. Daraus resultiert, daß eine Aussage über die Masse oder das Volumen des auf dem Sitz befindlichen Objekts, also z. B. die Erkennung eines Kindersitzes, kaum möglich ist.

Ein Weg, diese Probleme zu lösen, ergibt sich aus der WO 95/21752 entsprechend US 5,525,843. Dabei sollen die beiden Elektroden gegenüber der Fahrzeugmasse isoliert sein. Problematisch daran aber ist, daß sich eine vollständige Isolierung nicht erreichen läßt, da zumindest kapazitiv eine Kopplung zwischen der die beiden Elektroden beinhaltenden Meßanordnung und der Fahrzeugmasse sowie auch über das sich auf dem Sitz befindende Objekt immer vorhanden ist. Damit lassen sich auch Fehlerströme nicht vollständig verhindern. Zudem ist der potentialfreie Aufbau einer derartigen Meßanordnung aufwendig.

Der Erfindung liegt die Aufgabe zugrunde, ein Verfahren der eingangs genannten Art zu schaffen, das mit geringem apparativem Aufwand eine genaue Aussage über die Anwesenheit eines Objekts liefert.

Die Erfindung löst diese Aufgabe durch die Merkmale des Patentanspruchs 1.

Bei der Erfindung werden die beiden Elektroden nacheinader mit Wechselspannung betrieben und die sich ergebenden Wechselströme (insgesamt vier) analysiert. Jeder Wechselstrom ergibt sich aufgrund des abwechselnden Sende- und Empfangsbetrieb der Elektroden. Aus der Gesamtbetrachtung der Wechselströme läßt sich sowohl erkennen, ob ein Objekt vorhanden ist als auch wie groß die Erdung dieses Objekts ist. Letzteres ergibt sich aus den Ableitströmen, die nun gerade nicht kompensiert, sondern einzeln berücksichtigt werden.

Interessant ist dabei der Vergleich der beiden Wechselströme, die sich aus der Mitkopplung, d.h. der gegenseitigen Beeinflussung der beiden Elektroden ergeben. Diese Teilströme entstehen, wenn die eine Elektrode im Sendebetrieb und die andere im Empfangsbetrieb bzw. Sende- und Empfangsbetrieb umgekehrt sind. Sind die Wechselströme zumindest annähernd gleich groß, ist das Objekt in etwa richtig positioniert. Sind die Ströme deutlich voneinander verschieden, handelt es sich in der Regel um eine "out of position" Situation, d.h. das Objekt entspricht in seiner Lage nicht der natürlichen Sitzposition.

Für die Berechnung der Erdungskapazität des Objekts kann insbesondere im letzteren Fall der Mittelwert der beiden o.g. Wechselströme verwendet werden. Das Berechnungsergebnis ist dann hinreichend genau.

Das erfindungsgemäße Verfahren ist anhand der Zeichnung weiter erläutert. Es zeigt

Fig. 1    eine Vorrichtung zur Durchführung des Verfahrens,

Fig. 2    ein Ersatzschaltbild für eine Betriebsweise des erfindungsgemäßen Verfahrens und

Fig. 3    das Ersatzschaltbild für die zweite Betriebsweise des erfindungsgemäßen Verfahrens.

In einem schematisch gezeigten Fahrzeugsitz 1 befinden sich Elektroden E1 und E2, die jeweils mit Wechselspannung beaufschlagt werden. In der Praxis hat sich eine Wechselspannungsfrequenz zwischen 10 und 150kHz, vorzugsweise von 50kHz als zweckmäßig erwiesen. Die in den Zuleitungen 4 und 5 sich ergebenden Wechselströme werden mit einer nicht dargestellten Meßeinrichtung bestimmt. Im folgenden ist dabei jeweils die Amplitude I von besonderem Interesse.

Es bestehen prinzipiell zwei Meßmodi:

1. Messen des Sendestroms (Amplitude Î) an einer Elektrode gegen Masse bei bekannter Sendespannung und Frequenz ("loading mode")
2. Messen des Empfangsstroms an der anderen, nicht sendenden Elektrode ("couple mode")

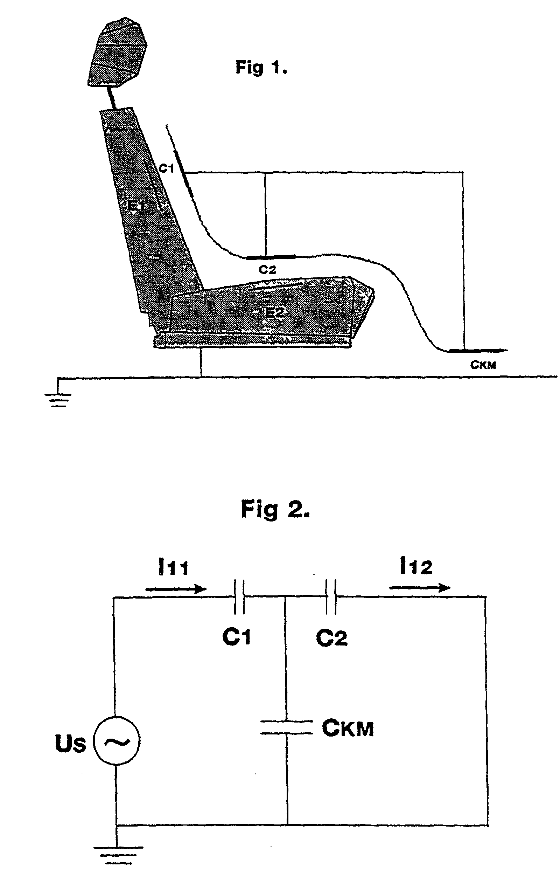

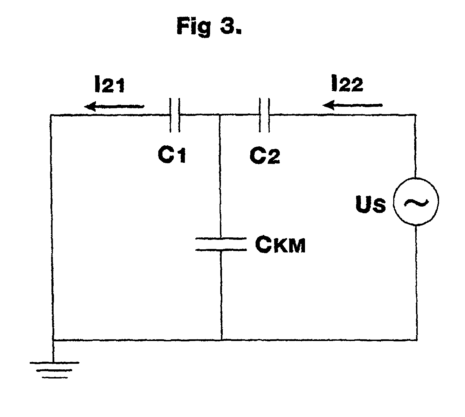

Bei einer kapazitiven Sensorik, wie sie hier dargestellt ist, besteht generell das Problem, daß die Amplitudenhöhen durch die Erdung des Objekts beeinflußt werden. Bei einer Geometrie wie in Fig 1. dargestellt, ist der Effekt einer stärkeren Erdung des Objekts=Insassen die Zunahme der Amplitude bei loading mode und die Abnahme der Amplitude bei couple mode. Die Erdung des Objekts wird i.f. durch einen im Ersatzschaltbild (Fig. 2 und 3 ) mit $C_{KM}$ bezeichneten Kondensator berücksichtigt.

Es ist möglich, die a priori unbekannte Erdung des Objekts durch eine Kombination von loading mode und couple mode-Messungen zu bestimmen und somit den Masseeinfluß zu eliminieren. Gemäß der Kirchhoff'schen Regel läßt sich der Sendebetrieb der Elektrode E1 (und damit der Empfangsbetrieb der Elektrode E2) durch das in Fig. 2 gezeigte und der Sendebetrieb der Elektrode E2 (=Empfangsbetrieb der Elektrode 2) durch das in Fig. 3 gezeigte Ersatzschaltbild beschreiben. Dabei wird eine gute Kopplung der Elektroden an das Objekt und eine gute Abschirmung der Elektroden gegen Masse angenommen. Hierfür kann jeder Teilelektrode eine Schirmung in Form einer elektrisch leitenden Platte 8 zugeordnet sein, durch die eine Richtwirkung hin zum Objekt erzielt wird (vgl. US 5,166,679 A).

Für den in Fig. 1 gezeigten Fall mit zwei Elektroden E1 und E2 im Sitz ergeben sich die nachfolgenden Gleichungen. Der Fall n Elektroden ergibt sich daraus durch Bildung beliebiger Elektrodenpaare.

Unter der Annahme, daß abwechselnd mit einer Elektrode gesendet und mit der anderen empfangen wird berechnen sich die vier maximalen Stromwerte (=Amplituden) $\hat{I}_{ij}$ zu:

$$I_{11}= C_1 \cdot \frac{C_2 + C_{KM}}{C_1 + C_2 + C_{KM}} \cdot \overline{\omega}U_S \text{ und } I_{22} = C_2 \cdot \frac{C_1 + C_{KM}}{C_1 + C_2 + C_{KM}} \cdot \overline{\omega}U_S$$

$$I_{12} = I_{21} = I_R = \frac{C_1 \cdot C_2}{C_1 + C_2 + C_{KM}} \cdot \overline{\omega}U_S$$

mit

$C_i$ gleich der Kapazität der Elektrode $E_i$ (=1 oder 2)

$U_s$ gleich der Wechselspannungsamplitude,

$\omega$ gleich der Wechselspannungsfrequenz und

$\hat{I}_{ii}$ gleich dem loading mode-Strom der Elektrode $E_i$ bzw.

$\hat{I}_{ij}$ gleich dem Empfangsstrom der Elektrode $E_j$ mit $E_i$ als Sender.

Das Gleichungssystem mit 3 Gleichungen und 3 Unbekannten läßt sich auflösen, mit $S_{ij}=I_{ij}/(\omega U_S)$ und $S_R = I_R/(\omega U_S)$ ergibt sich:

$$C_1 = \frac{S_{11} \cdot S_{22} - (S_R)^2}{S_{22} - S_R}$$

$$C_2 = \frac{S_{11} \cdot S_{22} - (S_R)^2}{S_{11} - S_R}$$

$$C_{KM} = \frac{S_{11} \cdot S_{22} - (S_R)^2}{S_R}$$

$C_1$ ist ein Maß für den Abstand des Objekts zur Elektrode E1, $C_2$ ist ein Maß für den Abstand des Insassen zur Elektrode E2 und $C_{KM}$ ist die nunmehr bekannte Erdung des Objekts. Damit lassen sich eindeutige Rückschlüsse auf Größe, aktuelle Lage und Ausmaß eines Objekts gewinnen. Nicht dargestellte Sicherheitseinrichtungen können so bedarfsgerecht aktiviert werden.

Für den Fall, daß die Kopplung des Objekts zu den Elektroden E1 und/oder E2 nicht gut ist, z.B. bei "Out-of-Position", sind die Empfangsströme $\hat{I}_{12}$ und $\hat{I}_{21}$ nicht mehr gleich. In diesem Fall kann es vorteilhaft sein, für $\hat{I}_R$ nicht den Mittelwert aus $\hat{I}_{12}$ und $\hat{I}_{21}$ einzusetzen, sondern eine andere Größe, z.B. den kleineren der beiden Werte.

# EP 0 993 993 B1

**Patentansprüche**

1. Verfahren zur kapazitiven Objekterkennung bei Fahrzeugen, bei der zwei Kondensatorelektroden mit Wechselspannung beaufschlagt werden und die Anwesenheit eines Objekts durch eine Änderung der Kapazität eines Kondensators bemerkt wird, **dadurch gekennzeichnet, daß** die beiden Elektroden (E1, E2) nacheinander und jeweils für sich mit Wechselspannungen beaufschlagt werden, und daß die sich dabei in den Zuleitungen (4,5) der beiden Elektroden ergebenden Wechselströme analysiert werden.

2. Verfahren nach Anspruch 1, **dadurch gekennzeichnet, daß** die sich durch die Mitkopplung der beiden Elektroden sich ergebenden, beiden Wechselströme miteinander verglichen werden.

3. Verfahren nach Anspruch 2, **dadurch gekennzeichnet, daß** der Mittelwert der beiden Wechselströme anstelle der individuellen Wechselströme berücksichtigt wird.

4. Verfahren nach Anspruch 2, **dadurch gekennzeichnet, daß** der kleinere der beiden Wechselströme anstelle der individuellen Wechselströme berücksichtigt wird.

**Claims**

1. A method for capacitative object detection in vehicles, in which two capacitor electrodes are fed with alternating voltage and the presence of an object is detected by means of a change in the capacity of a capacitor, **characterised in that** the two electrodes (E1, E2) are fed with alternating voltages sequentially and individually, and that the alternating currents resulting in the feed conductors (4, 5) are analysed.

2. A method according to Claim 1, **characterised in that** the two alternating currents arising from the mutual coupling of the two electrodes are compared with each other.

3. A method according to Claim 2, **characterised in that** the mean value of the two alternating currents is considered instead of the individual alternating currents.

4. A method according to Claim 2, **characterised in that** the smaller of the two alternating currents is considered instead of the individual alternating currents.

**Revendications**

1. Procédé de reconnaissance capacitive d'objets dans un véhicule, selon lequel on applique une tension alternative aux deux électrodes d'un condensateur et on reconnaît la présence d'un objet par la variation de la capacité du condensateur,
   **caractérisé en ce que**
   on applique successivement aux deux électrodes (E1, E2) et chaque fois séparément des tensions alternatives, et on analyse les courants alternatifs qui en résultent dans les lignes d'alimentation (4, 5) des deux électrodes.

2. Procédé selon la revendication 1,
   **caractérisé en ce que**
   l'on compare entre eux les deux courants alternatifs résultant du couplage des deux électrodes.

3. Procédé selon la revendication 2,
   **caractérisé en ce qu'**
   on tient compte de la valeur moyenne des deux courants alternatifs à la place de la valeur individuelle de ces courants.

4. Procédé selon la revendication 2,
   **caractérisé en ce qu'**
   on tient compte du plus petit des deux courants alternatifs à la place des courants alternatifs pris individuellement.

**Fig 1.**

**Fig 2.**

Fig 3.